# FASCICULE DE BREVET EUROPEEN

(11) **EP 3 066 750 B1**
(45) Date de publication et mention de la délivrance du brevet: **09.09.2020**
(21) Numéro de dépôt: 14806033.8
(22) Date de dépôt: 07.11.2014
(51) Int. Cl.: H02K 5/14, H01R 39/38

(54) **PORTE-BALAIS DE MACHINE ELECTRIQUE POUR VEHICULE ET DEMARREUR CORRESPONDANT**
BÜRSTENHALTER EINER ELEKTRISCHEN MASCHINE FÜR KRAFTFAHRZEUGANLASSER, UND ENTSPRECHENDER ANLASSER
BRUSH HOLDER OF AN ELECTRIC MACHINE FOR A VEHICLE AND CORRESPONDING STARTER

(30) Priorité: 08.11.2013 FR 1360954
(43) Date de publication de la demande: 14.09.2016
(73) Titulaire: Valeo Equipements Electriques Moteur, 94046 Créteil Cedex (FR)
(72) Inventeur: IMBERT, Denis, F-38300 Sérézin de la Tour (FR); POTACZEK, Krzystzof, F-690003 Lyon (FR)
(74) Mandataire: Prigent, Pierre
(86) Numéro de dépôt international: PCT/FR2014/052851
(87) Numéro de publication internationale: WO 2015/067907

(56) Documents cités:
- EP-A1- 2 197 076
- WO-A1-95/30269
- WO-A1-2010/001006
- DE-A1-102011 017 526
- US-A1- 2010 045 136

## Description

### DOMAINE TECHNIQUE DE L'INVENTION

L'invention porte sur un porte-balais de machine électrique pour véhicule ainsi que sur le démarreur correspondant.

L'invention trouve une application particulièrement avantageuse, mais non exclusive, avec les démarreurs de véhicule automobile, en particulier ceux installés dans les véhicules équipés de la fonction d'arrêt et de re-démarrage du moteur thermique ("stop and start" en anglais).

### ARRIERE PLAN TECHNOLOGIQUE

De façon connue en soi, un porte-balais est monté sur l'arbre du rotor d'un démarreur de manière à coopérer avec un collecteur électrique solidaire de l'arbre du rotor.

Le porte-balais comporte une plaque de support portant un ensemble de cages servant chacune de logement à un balai. Les balais réalisés en matériau électriquement conducteur permettent l'alimentation électrique du rotor par commutation du courant électrique dans les conducteurs du rotor.

A cet effet, chaque balai comporte une face destinée à venir frotter contre les lames conductrices du collecteur reliées au bobinage du rotor. Un moyen élastique, tel qu'un ressort, exerce sur chaque balai un effort en direction du collecteur pour assurer le contact entre le balai et les lames du collecteur.

Les balais présentent des polarités alternées. Ainsi, les balais de polarité positive sont reliés électriquement, via leur tresse respective, à un connecteur inter-balais auquel est également connecté électriquement le fil d'alimentation issu du contacteur du démarreur. Par ailleurs, les balais destinés au retour de courant sont reliés électriquement à la masse de la machine au moyen de leur tresse respective soudée sur le capot formant un palier arrière pour l'arbre de rotor.

Les documents EP 2197076, WO 2010/001006 et WO95/30269 décrivent chacun un porte-balais comportant un connecteur inter-balais et des cages porte-balais.

Le connecteur inter-balais est également fixé par soudure ou sertissage à des cages à balais pour son maintien mécanique.

Le problème d'une telle configuration est que le connecteur a tendance à se casser au niveau de ses fixations avec les cages à balais après un certain nombre de cycles de fonctionnement. Cette cassure du connecteur est due à l'environnement vibratoire sévère dans lequel se trouve le démarreur ainsi qu'à la dilatation thermique du connecteur à l'endroit des fixations avec les cages lorsque le connecteur est parcouru par un courant.

### OBJET DE L'INVENTION

L'invention vise à remédier efficacement à cet inconvénient en proposant un porte-balais de machine électrique tournante pour véhicule comportant au moins deux cages servant respectivement de logement à un balai, et un connecteur inter-balais auquel sont destinés à être soudés des tresses desdits balais de même polarité, caractérisé en ce que lesdites cages sont munies chacune d'au moins une patte s'étendant axialement par rapport à un axe du porte-balais, et en ce que ledit connecteur inter-balais est maintenu par déformation élastique contre les pattes des cages à balais.

Ainsi, du fait du maintien de l'anneau (connecteur inter-balais) par déformation élastique contre les pattes, une telle configuration permet à l'anneau de résister efficacement aux vibrations et d'absorber aisément les variations de dimensions du connecteur dues à la dilatation thermique du connecteur lors du passage du courant. On évite ainsi les cassures du connecteur au niveau de sa liaison avec les cages à balais. En outre, l'invention permet de maintenir efficacement le connecteur en position contre les pattes des cages malgré la présence des vibrations.

Le connecteur inter-balai est maintenu uniquement par déformation élastique de celui-ci contre les pattes de cages à balais.

Le porte balais comporte une troisième patte issue d'une cage accueillant un troisième balai ayant une polarité différente des deux premiers balais contre laquelle ledit connecteur inter-balais vient également un appui. Cela permet de conférer un point d'appui supplémentaire pour améliorer le blocage du connecteur.

le porte-balai comporte en outre un élément isolant positionnée autour d'une partie dudit connecteur inter-balais de manière à assurer une isolation entre la cage logeant le troisième balai et ledit connecteur inter-balai relié électriquement aux deux premiers balais. Le fait d'intercaler cet élément isolant permet d'éviter les risques de court-circuit.

Selon une réalisation, chaque patte vient de matière avec une paroi de la cage correspondante. On réduit ainsi au minimum le nombre de pièces intervenant dans l'ensemble porte-balais.

Selon une réalisation, ledit connecteur inter-balais comporte des décrochés destinés chacun à coopérer avec une patte correspondante de manière à éviter une rotation de dudit connecteur inter-balais autour d'un axe dudit connecteur. On améliore ainsi le maintien mécanique du connecteur inter-balais sur le porte-balais.

Selon une réalisation, chaque patte comporte un retour s'étendant sensiblement radialement vers l'intérieur dudit porte balais. Cela permet d'assurer un maintien axial du connecteur inter-balais sur le porte-balais.

Selon une réalisation, chaque cage comporte deux pattes en vis-à-vis l'une par rapport à l'autre entre lesquelles est destiné à s'engager ledit connecteur inter-balais. Une telle configuration permet d'améliorer le maintien radial du connecteur, dans la mesure où ce dernier est maintenu bloqué suivant les deux directions radiales.

Selon une réalisation, les pattes de chaque cage sont obtenues par pliage d'au moins une partie d'une des parois latérales de manière à créer une ouverture dans ladite face latérale pour autoriser un passage d'un bras d'un ressort en appui contre le balai positionné dans la cage correspondante. Une telle configuration permet ainsi un gain de matière en permettant d'utiliser, pour la réalisation des pattes, de la matière destinée normalement à être retirée pour le passage du bras du ressort.

Selon une réalisation, un écart entre les deux pattes présente un rétrécissement d'un côté d'une extrémité libre desdites pattes. Cela permet d'assurer un maintien axial du connecteur inter-balais sur le porte-balais dans la configuration à deux pattes en vis-à-vis l'une de l'autre.

Selon une réalisation, une zone de soudure d'un fil d'alimentation passant par un passe-fil est décalée par rapport à une zone de soudure d'une tresse du balai le plus proche du passe-fil. Une telle caractéristique permet d'éviter l'endommagement du connecteur.

Selon une réalisation, le porte-balais comporte un ressort à spirales associé à chaque cage, ledit ressort monté autour d'un pion issu de la cage correspondante étant apte à solliciter radialement le balai correspondant en direction de l'axe dudit porte-balais. On optimise ainsi l'encombrement diamétral du porte-balais selon l'invention.

Selon une réalisation, ledit connecteur inter-balais présente une dimension axiale supérieure à sa dimension radiale. Cela permet de faciliter la soudure des tresses des balais de polarité positive sur la périphérie interne du connecteur.

Selon une réalisation les cages sont métalliques.

Selon une réalisation, le support de balais comprend au moins quatre cages portes balais distribuées dans sa périphérie, deux de polarités négatives en alternance dans le sens de circulation autour dudit porte-balais.

Selon une réalisation, le connecteur inter-balais est connecté électriquement à au moins deux cages de balais de polarité positive.

Selon un autre mode de réalisation, le connecteur inter-balais est connecté à un balai par le biais d'une tresse soudée au connecteur.

Selon un autre mode de réalisation, le connecteur inter-balais est connecté à un balai positif par le biais de la pate qui est un conducteur métallique et en ce que la cage à balai est en plastique. La pate permettant de relier électriquement le connecteur inter-balais au balai par le biais d'une tresse entre le balai et la pate.

Selon un mode de réalisation, les cages à balai négatif sont en plastique.

Selon le mode de réalisation précédent, les cages à balai positive sont métallique conducteur électriquement.

L'invention a également pour objet un porte-balais de machine électrique tournante, caractérisé en ce qu'il comporte au moins deux cages, chacune des cages comportant deux pattes en vis-à-vis l'une par rapport à l'autre, lesdites deux pattes s'étendant axialement par rapport à un axe dudit porte-balais étant obtenues par pliage d'au moins une partie d'une des parois latérales de manière à créer une ouverture dans ladite face latérale pour autoriser un passage d'un bras d'un ressort en appui contre le balai positionné dans la cage correspondante. Une telle configuration permet ainsi un gain de matière en permettant d'utiliser de la matière destinée normalement à être retirée pour le passage du bras du ressort.

En outre, l'invention concerne un démarreur de moteur thermique de véhicule automobile caractérisé en ce qu'il comporte un porte-balais selon l'invention.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en perspective d'un premier mode de réalisation du porte-balais selon la présente invention;
La figure 2 représente une vue de dessus du connecteur inter-balais selon la présente invention utilisé dans le porte-balais de la figure 1;
La figure 3 montre une vue en perspective d'une cage à balai utilisée avec le mode de réalisation de la figure 1;
La figure 4 est une vue en perspective d'un deuxième mode de réalisation d'un porte-balais selon la présente invention;
Les figures 5a et 5b représentent respectivement une vue en perspective et une vue de côté d'une cage à balai munie de deux pattes de maintien utilisée avec le mode de réalisation de la figure 4.

Les éléments identiques similaires ou analogues conservent la même référence d'une figure à l'autre.

### DESCRIPTION D'EXEMPLES DE REALISATION DE L'INVENTION

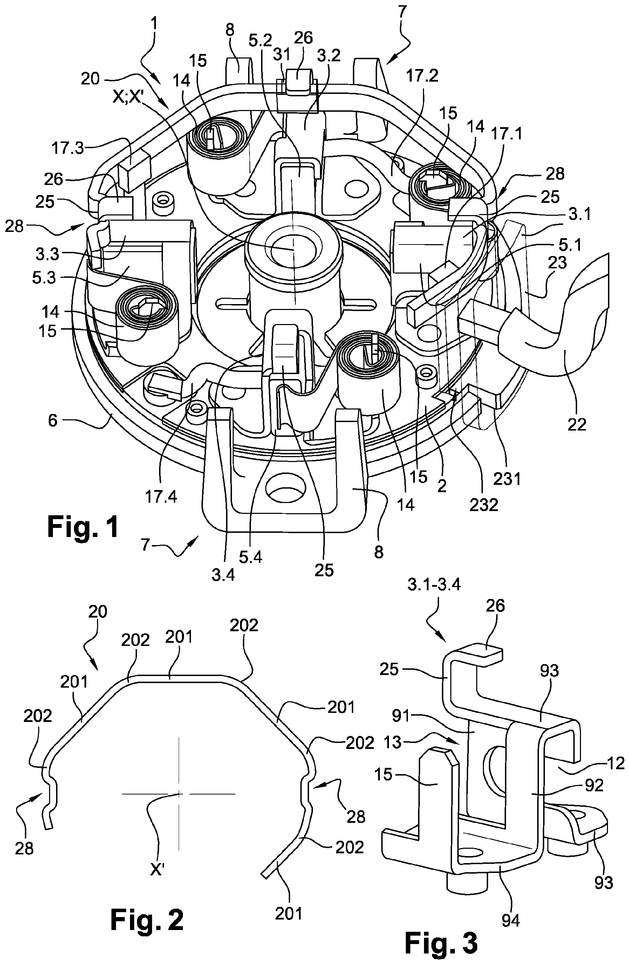

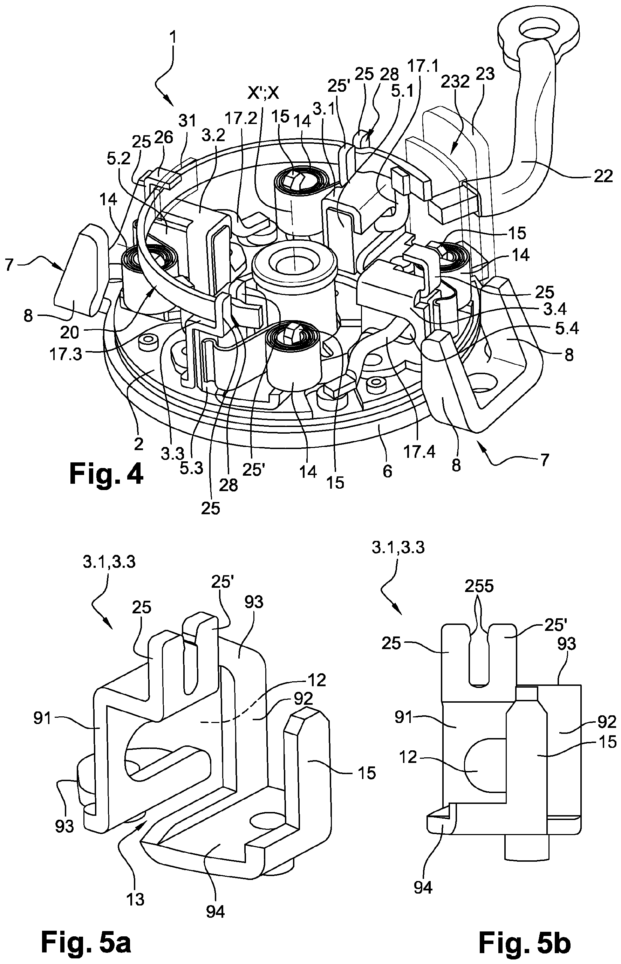

En référence aux figures 1 et 4, on décrit un porte-balais 1 selon l'invention pour démarreur de véhicule automobile.

Ce porte-balais 1 comporte une plaque de support 2 de forme annulaire sur laquelle est fixé un ensemble de cages 3.1-3.4 à balai servant chacune de logement à un balai 5.1-5.4. Un axe X de la plaque de support 2 correspond à l'axe du porte-balais 1.

La plaque de support 2 et les cages 3.1-3.4 qu'elle porte viennent se fixer sur un capot 6 formant un palier arrière pour l'arbre de rotor de la machine électrique. Le capot 6 comporte par exemple deux oreilles 7 saillantes radialement traversées chacune par un trou pour le passage de tirants vissés sur le palier avant du démarreur. Deux protubérances 8 issues des oreilles sont configurées pour se rabattre contre la culasse de la machine lors du vissage des tirants afin d'améliorer le maintien mécanique de l'ensemble.

Chaque balai 5.1-5.4 est monté à coulissement à l'intérieur d'une cage 3.1-3.4 laquelle est ouverte du côté de l'axe X pour permettre la mise en contact électrique des balais 5.1-5.4 avec un collecteur d'un rotor de machine électrique (non représenté).

Plus précisément, comme cela est visible sur les figures 3, 5a et 5b, chaque cage 3.1-3.4 est réalisée par pliage d'une plaquette de tôle mince de manière à former sensiblement un oméga dont les branches d'extrémité sont fixées sur la plaque de support 2. Chaque cage 3.1-3.4 comporte ainsi deux parois latérales 91, 92 parallèles en vis-à-vis reliées entre elles par une paroi supérieure 93. Les parois d'extrémité 94, 95 correspondant aux branches de l'oméga sont issues des bords inférieurs des parois latérales 91, 92 de la cage à balai 3.1-3.4. Une des parois latérales 91 présente une échancrure 12 vers l'avant pour autoriser le passage de la tresse 17.1-17.4 du balai logé dans la cage 3.1-3.4 correspondante. L'autre paroi latérale 92 présente une ouverture 13 vers l'arrière pour autoriser le passage du bras du ressort 14 correspondant. L'utilisation d'une plaquette métallique permet de conférer au porte-balais 1 une tenue plus importante aux températures élevées, ce qui est particulièrement avantageux pour les démarreurs du type "stop and start" fréquemment sollicités lors du fonctionnement du véhicule. Toutefois, en variante, les cages à balai 3.1-3.4 pourront également être réalisées dans un matériau isolant ayant une bonne résistance à la chaleur.

Un ressort à spirales 14 associé à chaque cage 3.1-3.4 sollicite radialement le balai 5.1-5.4 correspondant vers des lames de contact du collecteur portées par un corps du collecteur en matière électriquement isolante, telle que de la matière plastique. Ce ressort 14 est en l'occurrence monté autour d'un pion 15 s'étendant axialement par rapport à l'axe X. Ce pion 15 est obtenu par pliage d'une des parois d'extrémité 94, 95 de chaque cage 3.1-3.4. Ainsi, le ressort 14 comporte une partie enroulée formée par une pluralité de spires. La partie enroulée se termine par un bras muni à son extrémité d'un repli destiné à venir en appui contre la face arrière du balai 5.1-5.4. Une telle configuration du bras permet de garantir une bonne surface d'appui du bras du ressort 14 contre la face arrière du balai 5.1-5.4 quel que soit l'état d'usure du balai 5.1-5.4.

Les balais 5.1-5.4 présentent des polarités alternées. Ainsi, les balais 5.1 et 5.3 de polarité positive sont reliés électriquement, via leur tresse respective 17.1, 17.3, à un connecteur inter-balais 20 auquel est également connecté électriquement un fil d'alimentation 22 issu du contacteur du démarreur. A cet effet, un passe-fil 23 est destiné au passage du fil d'alimentation 22 pour permettre la soudure de son extrémité au connecteur inter-balais 20.

Ce passe-fil 23 réalisé par exemple en caoutchouc comporte un trou 231 destiné à s'engager de manière complémentaire sur un ergot de section rectangulaire comme le trou 231. En outre, le passe-fil 23 est pourvu d'une rainure 232 pour son montage sur le bord d'une échancrure réalisée à l'extrémité de la carcasse de la machine électrique (cf. figures 1 et 4).

Par ailleurs, les balais 5.2 et 5.4 destinés au retour de courant sont reliés électriquement à la masse de la machine au moyen de leur tresse respective 17.2, 17.4 soudée sur le capot 6. Les tresses souples 17.1-17.4 des balais 5.1-5.4 sont avantageusement en cuivre ou en alliage de cuivre pour faciliter le soudage sur le capot 6 ou sur le connecteur inter-balais 20.

Plus précisément, le connecteur inter-balais 20 est maintenu par déformation élastique contre au moins deux pattes 25 appartenant aux cages 3.1 et 3.3. Ces pattes 25, qui viennent de matière avec les cages correspondantes 3.1-3.4, s'étendent axialement par rapport à l'axe X de la plaque de support 2. Autrement dit, le connecteur 20 est mis en compression à sa périphérie externe entre les pattes 25 opposées l'une par rapport à l'autre de manière à assurer son maintien mécanique. En l'occurrence, une troisième patte 25 issue de la cage 3.2 permet de conférer un point d'appui supplémentaire pour améliorer le blocage du connecteur 20. La quatrième patte de la quatrième cage 3.4 n'est pas utilisée pour le maintien du connecteur 20 compte tenu de la configuration ouverte du connecteur 20.

Chaque patte 25 comporte de préférence du côté de son extrémité libre un retour 26 s'étendant sensiblement radialement vers l'intérieur du porte-balais 1 de manière à délimiter avec la paroi supérieure 93 de la cage 3.1-3.4 une forme en C. Le connecteur 20 est ainsi maintenu axialement entre le retour 26 et la paroi supérieure 93 de la cage 3.1-3.4.

En l'occurrence, chaque patte 25 et son retour 26 sont obtenus par pliage d'au moins une partie de la face arrière correspondante de la cage 3.1-3.4. Comme cela est bien visible sur la figure 2, le connecteur 20 comporte de préférence des décrochés 28 destinés chacun à coopérer avec une patte 25 correspondante d'une cage à balai 3.1-3.4. Chaque décroché 28 présente à cet effet une forme de cuvette dont le creux est tourné vers l'extérieur du connecteur 20. La cuvette est telle que ses faces d'extrémité sont destinées à venir en appui contre des faces latérales de la patte 25 de manière à éviter une rotation du connecteur 20 autour de son axe X'. L'axe X' se confond sensiblement avec l'axe X du porte-balais 1 lorsque le connecteur 20 est mis en position sur le porte-balais 1.

Comme cela ressort clairement de la figure 2, le connecteur 20 est formé par une succession de portions droites 201 et de portions courbes 202 reliant entre elles deux portions droites successives. Le connecteur décrit ainsi globalement une forme de portion d'anneau ouverte. Les décrochés 28 sont ménagés dans deux portions droites 201 en vis-à-vis l'une par rapport à l'autre. Les pattes 25 sont destinée à être plaquées contre une des portions droites 201 pouvant le cas échéant être munie d'un décroché 28. Alternativement, le connecteur 20 présente une forme de portion d'anneau comme dans le mode de réalisation de la figure 4, ou une forme annulaire à circonférence complète.

Le connecteur 20 est réalisé dans un matériau à forte conductivité électrique tel que du cuivre. Le connecteur 20 présente de préférence une forme plate, c'est-à-dire qu'il présente une dimension axiale supérieure à sa dimension radiale pour faciliter la soudure des tresses 17.1 et 17.3 appartenant aux balais 5.1 et 5.3 de polarité positive sur la périphérie interne du connecteur 20.

Les soudures des tresses 17.1 et 17.3 sur le connecteur 20 sont réalisées de manière à présenter une résistance mécanique ainsi qu'une résistance électrique adaptées à l'application. A cet égard, la zone de soudure du fil d'alimentation 22 est décalée de préférence par rapport à la zone de soudure de la tresse 17.1 du balai positif 5.1 le plus proche du passe-fil 23. Cela permet d'éviter l'endommagement du connecteur 20. La soudure des deux éléments dans la même zone est également envisageable même si elle est plus difficile à réaliser.

Afin d'éviter les risques de court-circuit, un élément isolant 31 pourra être positionné autour du connecteur 20 de manière à assurer une isolation entre la cage 3.2 logeant le balai 5.2 de retour de courant et le connecteur 20 relié aux balais 5.1 et 5.3 de polarité positive.

Pour mettre en place le connecteur 20 en position, l'opérateur pourra rapprocher l'une de l'autre les deux extrémités libres du connecteur 20 de manière à mettre le connecteur 20 en compression. Il sera alors possible d'engager ledit connecteur 20 suivant une direction radiale entre les deux balais 5.1 et 5.3 de polarité positive, en sorte que le connecteur 20 vient en appui, le cas échéant par l'intermédiaire de l'élément isolant 31, contre la patte 25 de la cage accueillant le balai 5.3 de polarité négative. L'opérateur pourra ensuite relâcher les extrémités du connecteur 20 en sorte que les décrochés 28 viennent coopérer avec les pattes 25 des cages 3.1 et 3.3 opposées logeant les balais 5.1, 5.3 de polarité positive.

Dans le mode de réalisation de la figure 4, les cages 3.1 et 3.3 comportent chacune deux pattes 25, 25' en vis-à-vis l'une par rapport à l'autre entre lesquelles est destiné à être inséré le connecteur 20. Une telle configuration permet d'améliorer le maintien radial du connecteur 20, dans la mesure où ce dernier est maintenu bloqué suivant les deux directions radiales par les pattes 25, 25'.

Les décrochés 28 du connecteur 20 sont destinés à s'insérer à l'intérieur de l'espace en forme de U délimité par les deux pattes 25, 25' et la paroi supérieure 93 de chaque cage 3.1, 3.3 pour éviter une rotation du connecteur 20 autour d'un axe X' du connecteur 20 sensiblement confondu avec l'axe X lorsque le connecteur 20 est installé sur le porte-balais 1.

Les pattes 25, 25' sont obtenues par pliage d'une partie arrière de la paroi latérale 92 de manière à créer une ouverture dans ladite face latérale pour le passage du bras du ressort 14 en appui contre le balai 5.1, 5.3 positionné dans ladite cage correspondante 3.1, 3.3. On découpe ensuite la zone médiane de la partie repliée pour définir les deux pattes 25, 25' ainsi que l'espace autorisant l'insertion du connecteur 20. Ainsi, les deux pattes 25, 25' des cages 3.1, 3.3 viennent de matière avec la paroi supérieure 93 et se situent dans un plan s'étendant sensiblement dans le prolongement de la paroi latérale 92 ouverte pour le passage du bras du ressort 14. Une telle configuration permet ainsi un gain de matière en permettant d'utiliser, pour la réalisation des deux pattes 25, 25', de la matière destinée normalement à être retirée pour le passage du bras du ressort 14.

Comme cela est bien visible sur la figure 5b, un écart entre les deux pattes 25, 25' présente un rétrécissement du côté d'une extrémité libre des pattes 25, 25' de manière à assurer un maintien axial du connecteur 20. Ce rétrécissement est défini par deux protubérances 255 des pattes 25, 25' tournées l'une vers l'autre s'étendant vers l'intérieur de l'espace entre les deux pattes 25, 25'.

Les deux autres cages 3.2, 3.4 logeant les balais 5.2, 5.4 de retour de courant présentent comme précédemment chacune une patte 25 délimitant avec la face supérieure une forme de C. L'utilisation de ce type de cage permet ainsi un positionnement aisé de l'élément isolant 31 dans le creux délimité par la forme en C. On évite également les risques d'endommagement de l'élément isolant 31 lors de la fabrication, ou en cours d'utilisation du démarreur installé dans un environnement vibratoire sévère générant des mouvements de faiblement amplitude entre les pièces.

Le connecteur 20 présente en l'occurrence une forme de portion d'anneau. Des portions plates pourront être ménagées dans ce connecteur 20 dans les zones destinées à venir en appui contre les pattes 25, 25'. Alternativement, le connecteur 20 présente une forme annulaire à circonférence complète ou une forme analogue à celle du mode de réalisation de la figure 1.

Lors de la mise en place du connecteur inter-balais 20, l'opérateur pourra rapprocher l'une de l'autre les deux extrémités libres du connecteur 20, de manière à mettre le connecteur en compression. Il est alors possible de mettre en appui le connecteur via l'élément isolant 31 contre la patte 25 de la cage 3.2 accueillant le balai 5.2 de polarité négative. Ensuite, le connecteur 20 est inséré entre les pattes 25, 25' délimitant un espace en forme de U des cages 3.1, 3.3 logeant les balais 5.1, 5.3 de polarité positive. Lors de son insertion dans le creux du U délimité par les pattes, le connecteur 20 va avoir tendance à écarter élastiquement les protubérances 255 qui reviennent ensuite dans leur position initiale de manière à assurer un maintien axial du connecteur 20. L'opérateur pourra ensuite relâcher les extrémités du connecteur 20 en sorte que le connecteur 20 est maintenu par déformation élastique suivant une direction sensiblement radiale contre les pattes externes 25 des supports en forme de U.

L'homme du métier pourra bien entendu modifier les configurations du porte-balais 1 et des cages 3.1-3.4 correspondantes précédemment décrits sans sortir du cadre de l'invention. Ainsi, dans le mode de réalisation de la figure 4, il serait possible de souder le connecteur 20 aux pattes 25, 25' délimitant l'espace en forme de U. Alternativement, le connecteur inter-balais 20 pourrait également être utilisé pour assurer la connexion des balais 5.2 et 5.4 de polarité négative. Le ressort 14 à spirales peut également être remplacé par un ressort cylindrique prenant appui sur le capot 6 pour pousser le balai 5.1-5.4 correspondant contre les lames du collecteur. Le porte-balais 1 est ici un porte-balais de machine d'un démarreur de véhicule automobile. En variante, le porte-balais 1 pourrait également appartenir à un alternateur ou à un alterno-démarreur. En variante, le porte-balais comporte plus de quatre balais 5.1-5.4 et cages (3.1-3.4) correspondantes.

## Revendications

1. Porte-balais (1) de machine électrique tournante pour véhicule comportant au moins deux cages (3.1, 3.3) servant respectivement de logement à au moins un balai (5.1; 5.3), et un connecteur inter-balais (20), décrivant une forme de portion d'anneau, auquel sont destinés à être soudés des tresses (17.1, 17.3) desdits balais (5.1; 5.3) de même polarité, **caractérisé en ce que** lesdites cages (3.1, 3.3) sont munies chacune d'au moins une patte (25) s'étendant axialement par rapport à un axe du porte-balais (1), **en ce que** ledit connecteur inter-balais (20) est maintenu uniquement par déformation élastique de celui-ci contre les pattes (25) des cages (3.1, 3.3) à balais, le connecteur inter-balais (20) étant mis en compression à sa périphérie externe entre les pattes (25) opposées l'une par rapport à l'autre de manière à assurer son maintien mécanique, **en ce qu'**il comporte une troisième patte (25) issue d'une cage (3.2) accueillant un troisième balai (5.2) ayant une polarité différente des deux premiers balais (5.1, 5.3) contre laquelle ledit connecteur inter-balais (20) vient également en appui, et **en ce qu'**il comporte en outre un élément isolant (31) positionné autour d'une partie dudit connecteur inter-balais (20) de manière à assurer une isolation entre la cage (3.2) logeant le troisième balai (5.2) et ledit connecteur inter-balais (20) relié électriquement aux deux premiers balais (5.1, 5.3).

2. Porte-balais selon la revendication 1, **caractérisé en ce que** chaque patte vient de matière avec une paroi (93) de la cage (3.1, 3.3) correspondante.

3. Porte-balais selon la revendication 1 ou 2, **caractérisé en ce que** ledit connecteur inter-balais (20) comporte des décrochés (28) destinés chacun à coopérer avec une patte (25) correspondante de manière à éviter une rotation de dudit connecteur inter-balais (20) autour d'un axe dudit connecteur (20).

4. Porte-balais selon l'une quelconque des revendications 1 à 3, **caractérisé en ce que** chaque patte (25) comporte un retour (26) s'étendant sensiblement radialement vers l'intérieur dudit porte balais (1).

5. Porte-balais selon l'une quelconque des revendications 1 à 4, **caractérisé en ce que** chaque cage (3.1, 3.3) comporte deux pattes (25, 25') en vis-à-vis l'une par rapport à l'autre entre lesquelles est destiné à s'engager ledit connecteur inter-balais (20).

6. Porte-balais selon la revendication 5, **caractérisé en ce que** les pattes (25, 25') de chaque cage (3.1, 3.3) sont obtenues par pliage d'au moins une partie d'une des parois latérales (92) de manière à créer une ouverture dans ladite face latérale pour autoriser un passage d'un bras d'un ressort (14) en appui contre le balai (5.1-5.3) positionné dans la cage (3.1, 3.3) correspondante.

7. Porte-balais selon la revendication 5 ou 6, **caractérisé en ce que** un écart entre les deux pattes (25, 25') présente un rétrécissement d'un côté d'une extrémité libre desdites pattes (25, 25').

8. Porte-balais selon l'une quelconque des revendications 1 à 7, **caractérisé en ce qu'**une zone de soudure d'un fil d'alimentation (22) passant par un passe-fil (23) est décalée par rapport à une zone de soudure d'une tresse du balai (5.1) le plus proche dudit passe-fil (23).

9. Porte-balais selon l'une quelconque des revendications 1 à 8, **caractérisé en ce qu'**il comporte un ressort (14) à spirales associé à chaque cage (3.1, 3.3), ledit ressort (14) monté autour d'un pion (15) issu de la cage correspondante (3.1, 3.3) étant apte à solliciter radialement le balai (5.1, 5.3) correspondant en direction de l'axe (X) dudit porte-balais (1).

10. Porte-balais selon l'une quelconque des revendications 1 à 9, **caractérisé en ce que** ledit connecteur inter-balais (20) présente une dimension axiale supérieure à sa dimension radiale.

11. Porte-balais (1) de machine électrique tournante pour véhicule, selon l'une quelconques des revendications 5 à 7, **caractérisé en ce qu'**il comporte au moins deux cages (3.1, 3.3), chacune des cages (3.1, 3.3) comportant deux pattes (25, 25') en vis-à-vis l'une par rapport à l'autre, lesdites deux pattes (25, 25') s'étendant axialement par rapport à un axe (X) dudit porte-balais (1) étant obtenues par pliage d'au moins une partie d'une des parois latérales (91, 92) de manière à créer une ouverture dans ladite face latérale pour autoriser un passage d'un bras d'un ressort (14) en appui contre le balai positionné dans la cage (3.1, 3.3) correspondante.

12. Porte-balai (1) selon l'une quelconque des revendications précédentes, dans lequel les cages sont métalliques.

13. Démarreur de moteur thermique de véhicule automobile **caractérisé en ce qu'**il comporte un porte-balais (1) selon l'une quelconque des revendications précédentes.

## Patentansprüche

1. Bürstenhalter (1) einer elektrischen Maschine für Fahrzeug, der mindestens zwei Käfige (3.1, 3.3) umfasst, die jeweils als Aufnahme für mindestens eine Bürste (5.1; 5.3) dienen, und einen Zwischenbürstensteckverbinder (20), der eine Ringabschnittform beschreibt, an den Flechten (17.1, 17.3) der Bürsten (5.1; 5.3) mit derselben Polung geschweißt werden sollen, **dadurch gekennzeichnet, dass** die Käfige (3.1, 3.3) jeweils mit mindestens einer Pratze (25) versehen sind, die sich axial in Bezug auf eine Achse des Bürstenhalters (1) erstreckt, dass der Zwischenbürstensteckverbinder (20) nur durch seine elastische Verformung gegen die Pratzen (25) der Käfige (3.1, 3.3) für Bürsten gehalten wird, wobei der Zwischenbürstensteckverbinder (20) an seinem Außenumfang zwischen den Pratzen (25), die einander entgegengesetzt sind, derart in Kompression versetzt wird, dass sein mechanisches Halten sichergestellt ist, dass er eine dritte Pratze (25) umfasst, die aus einem Käfig (3.2) hervorgeht, der eine dritte Bürste (5.2) aufnimmt, die eine Polung aufweist, die von den zwei Bürstenhaltern (5.1, 5.3) unterschiedlich ist, gegen den der Zwischenbürstensteckverbinder (20) ebenfalls zur Auflage kommt, und dass er außerdem ein Isolierelement (31) umfasst, das um einen Teil des Zwischenbürstensteckverbinders (20) derart positioniert ist, dass eine Isolation zwischen dem Käfig (3.2), der die dritte Bürste (5.2) unterbringt, und dem Zwischenbürstensteckverbinder (20), der elektrisch mit den zwei ersten Bürsten (5.1, 5.3) verbunden ist, sichergestellt ist.

2. Bürstenhalter nach Anspruch 1, **dadurch gekennzeichnet, dass** jede Pratze aus einem Stück mit einer Wand (93) des entsprechenden Käfigs (3.1, 3.3) besteht.

3. Bürstenhalter nach Anspruch 1 oder 2, **dadurch gekennzeichnet, dass** der Zwischenbürstensteckverbinder (20) seitliche Vertiefungen (28) umfasst, die jeweils dazu bestimmt sind, mit einer entsprechenden Pratze (25) derart zusammenzuwirken, dass eine Drehung des Zwischenbürstensteckverbinders (20) um eine Achse des Steckverbinders (20) verhindert wird.

4. Bürstenhalter nach einem der Ansprüche 1 bis 3, **dadurch gekennzeichnet, dass** jede Pratze (25) einen Rücklauf (26) umfasst, der sich im Wesentlichen radial zu dem Inneren des Bürstenhalters (1) erstreckt.

5. Bürstenhalter nach einem der Ansprüche 1 bis 4, **dadurch gekennzeichnet, dass** jeder Käfig (3.1, 3.3) zwei Pratzen (25, 25') die einander gegenüberliegen umfasst, zwischen welchen der Zwischenbürstensteckverbinder (20) eingreifen soll.

6. Bürstenhalter nach Anspruch 5, **dadurch gekennzeichnet, dass** die Pratzen (25, 25') jedes Käfigs (3.1, 3.3) durch Falten mindestens eines Teils einer der Seitenwände (92) derart erhalten werden, dass eine Öffnung in der Seitenwand geschaffen wird, um ein Durchgehen eines Arms einer Feder (14) in Auflage gegen die Bürste (5.1 - 5.3), die in dem entsprechenden Käfig (3.1, 3.3) positioniert ist, zu gestatten.

7. Bürstenhalter nach Anspruch 5 oder 6, **dadurch gekennzeichnet, dass** ein Abstand zwischen den zwei Pratzen (25, 25') eine Verjüngung auf einer Seite eines freien Endes der Pratzen (25, 25') aufweist.

8. Bürstenhalter nach einem der Ansprüche 1 bis 7, **dadurch gekennzeichnet, dass** eine Schweißzone eines Versorgungsdrahts (22), der durch eine Drahtdurchführung (23) durchgeht, in Bezug auf eine Schweißzone einer Flechte der Bürste (5.1), die der Drahtdurchführung (23) am nächsten liegt, versetzt ist.

9. Bürstenhalter nach einem der Ansprüche 1 bis 8, **dadurch gekennzeichnet, dass** er eine Feder (14) mit Spiralen umfasst, die mit jedem Käfig (3.1, 3.3) assoziiert ist, wobei die Feder (14), die um einen Kontakt (15) montiert ist, der aus dem entsprechenden Käfig (3.1, 3.3) hervorgeht, geeignet ist, die entsprechende Bürste (5.1, 5.3) in Richtung der Achse (X) des Bürstenhalters (1) zu beanspruchen.

10. Bürstenhalter nach einem der Ansprüche 1 bis 9, **dadurch gekennzeichnet, dass** der Zwischenbürstensteckverbinder (20) ein axiales Maß aufweist, das größer ist als ein radiales Maß.

11. Bürstenhalter (1) einer elektrischen Maschine für Fahrzeug nach einem der Ansprüche 5 bis 7, **dadurch gekennzeichnet, dass** er mindestens zwei Käfige (3.1, 3.3) umfasst, wobei jeder der Käfige (3.1, 3.3) zwei Pratzen (25, 25') die einander gegenüberliegen umfasst, wobei die zwei Pratzen (25, 25'), die sich axial in Bezug auf eine Achse (X) des Bürstenhalters (1) erstrecken, durch Falten mindestens eines Teils einer der Seitenwände (91, 92) derart erhalten werden, dass eine Öffnung in der Seitenfläche geschaffen wird, um ein Durchgehen eines Arms einer Feder (14) in Auflage gegen die Bürste, die in dem entsprechenden Käfig (3.1, 3.3) positioniert ist, zu gestatten.

12. Bürstenhalter (1) nach einem der vorstehenden Ansprüche, wobei die Käfige metallisch sind.

13. Kraftfahrzeug-Verbrennungsmotoranlasser, **dadurch gekennzeichnet, dass** er einen Bürstenhalter (1) nach einem der vorstehenden Ansprüche umfasst.

## Claims

1. Brush-holder (1) of a rotating electrical machine for a vehicle comprising at least two cages (3.1, 3.3) used respectively to house at least one brush (5.1; 5.3), and an inter-brush connector (20), describing a ring-portion form, to which are intended to be soldered braids (17.1, 17.3) of said brushes (5.1; 5.3) of the same polarity, **characterized in that** said cages (3.1, 3.3) are each provided with at least one lug (25) extending axially relative to an axis of the brush-holder (1), **in that** said inter-brush connector (20) is held only by elastic deformation thereof against the lugs (25) of the brush cages (3.1, 3.3), the inter-brush connector (20) being compressed at its outer periphery between the opposing lugs (25) of one relative to the other so as to ensure that it is held mechanically, **in that** it comprises a third lug (25) stemming from a cage (3.2) accommodating a third brush (5.2) having a different polarity from the first two brushes (5.1, 5.3) against which said inter-brush connector (20) also comes to bear, and **in that** it also comprises an insulating element (31) positioned around a part of said inter-brush connector (20) so as to ensure an insulation between the cage (3.2) housing the third brush (5.2) and said inter-brush connector (20) linked electrically to the first two brushes (5.1, 5.3).

2. Brush-holder according to Claim 1, **characterized in that** each lug is made of a piece with a wall (93) of the corresponding cage (3.1, 3.3).

3. Brush-holder according to Claim 1 or 2, **characterized in that** said inter-brush connector (20) comprises indentations (28) each intended to cooperate with a corresponding lug (25) so as to avoid a rotation of said inter-brush connector (20) about an axis of said connector (20).

4. Brush-holder according to any one of Claims 1 to 3, **characterized in that** each lug (25) comprises a return (26) extending substantially radially towards the interior of said brush-holder (1).

5. Brush-holder according to any one of Claims 1 to 4, **characterized in that** each cage (3.1, 3.3) comprises two lugs (25, 25') facing one another between which said inter-brush connector (20) is intended to fit.

6. Brush-holder according to Claim 5, **characterized in that** the lugs (25, 25') of each cage (3.1, 3.3) are obtained by folding at least a part of one of the lateral walls (92) so as to create an opening in said lateral face to allow a passage for an arm of a spring (14) bearing against the brush (5.1-5.3) positioned in the corresponding cage (3.1, 3.3).

7. Brush-holder according to Claim 5 or 6, **characterized in that** a gap between the two lugs (25, 25') has a narrowing on a side of a free end of said lugs (25, 25').

8. Brush-holder according to any one of Claims 1 to 7, **characterized in that** a zone for soldering a power supply wire (22) passing through a grommet (23) is offset relative to a zone for soldering a braid of the brush (5.1) closest to said grommet (23).

9. Brush-holder according to any one of Claims 1 to 8, **characterized in that** it comprises a spiral spring (14) associated with each cage (3.1, 3.3), said spring (14) mounted around a pin (15) stemming from the corresponding cage (3.1, 3.3) being able to radially stress the corresponding brush (5.1, 5.3) towards the axis (X) of said brush-holder (1).

10. Brush-holder according to any one of Claims 1 to 9, **characterized in that** said inter-brush connector (20) has an axial dimension greater than its radial dimension.

11. Brush-holder (1) of a rotating electrical machine for a vehicle, according to any one of Claims 5 to 7, **characterized in that** it comprises at least two cages (3.1, 3.3), each of the cages (3.1, 3.3) comprising two lugs (25, 25') facing one another, said two lugs (25, 25') extending axially relative to an axis (X) of said brush-holder (1) being obtained by folding at least a part of one of the lateral walls (91, 92) so as to create an opening in said lateral face to allow a passage for an arm of a spring (14) bearing against the brush positioned in the corresponding cage (3.1, 3.3).

12. Brush-holder (1) according to any one of the preceding claims, wherein the cages are metal.

13. Heat engine starter of a motor vehicle, **characterized in that** it comprises a brush-holder (1) according to any one of the preceding claims.
